Europäisches Patentamt

European Patent Office

Office européen des brevets

(11) Publication number: **0 053 666**

A1

## (12) EUROPEAN PATENT APPLICATION

(21) Application number: 81107993.8

(22) Date of filing: 06.10.81

(51) Int. Cl.³: **B 62 D 3/12**

(30) Priority: 08.12.80 JP 175974/80 U

(43) date of publication of application:
16.06.82 Bulletin 82/24

(84) Designated Contracting States:
DE FR GB

(71) Applicant: NISSAN MOTOR COMPANY, LIMITED
No.2, Takara-cho, Kanagawa-ku
Yokohama City(JP)

(72) Inventor: Kuramoto, Naoyuki
No. 3-29-1, Shinmeidai Hamura-cho
Nishitamagun Tokyo(JP)

(72) Inventor: Noguchi, Hiroshi
No. 2-6-8, Nishi-machi
Kokubunji City(JP)

(74) Representative: Patentanwälte Grünecker,
Dr.Kinkeldey Dr.Stockmair, Dr.Schumann,Jakob,
Dr.Bezold Meister, Hilgers, Dr.Meyer-Plath
Maximilianstrasse 43
D-8000 München 22(DE)

(54) A rack and pinion type steering gear having a damper.

(57) A hollow cylinder (24) extends coaxially from an elongate housing (12) of a rack (14) so as to accommodate therein a coaxial extension of the rack. The interior of the cylinder is isolated from the exterior of the same by sealing members (26,28,30,32,34,36). A piston (38) is secured to the extension of the rack and slidably and sealingly received in the cylinder to divide the interior of the same into two chambers (24a,24b) which are filled with oil. The piston has an orifice (40) to provide a limited communication between the two chambers.

Croydon Printing Company Ltd.

A RACK AND PINION TYPE STEERING GEAR HAVING A DAMPER

BACKGROUND OF THE INVENTION

1. Field of the Invention

The present invention relates in general to a steering system of a wheeled motor vehicle, and more particularly to a rack and pinion type steering gear having a damper.

2. Description of the Prior Art

In order to reduce an unusual thrust applied to the steering mechanism from the stirred front wheels, it has been proposed to mount a damper to the steering mechanism. However, especially in a rack and pinion type steering gear having a damper, simplification in combining these two mechanisms is difficult because of their respective inherencies.

SUMMARY OF THE INVENTION

It is therefore an essential object of the present invention to provide a simplified rack and pinion type steering gear in which a damper is compactly assembled.

According to the present invention, there is provided a rack and pinion type steering gear having a damper, the gear comprising an elongate housing, an elongate rack partially and axially movably received in the housing to have a coaxial extension thereof projected from the housing axially outwardly, a pinion gear held by the housing and meshed with the rack to cause axial movement of the rack relative to the housing when rotated about its axis, a hollow cylinder coaxially extending from the housing to spacedly accommodate therein the coaxial extension of the rack, means for isolating the interior of the cylinder from the exterior of the same, the interior being filled with oil, and a piston secured to the coaxial extension of the rack and slidably and sealingly received in the cylinder to divide the interior of the cylinder into two chambers, the piston having an orifice to provide a limited communication between the two chambers.

DESCRIPTION OF THE INVENTION

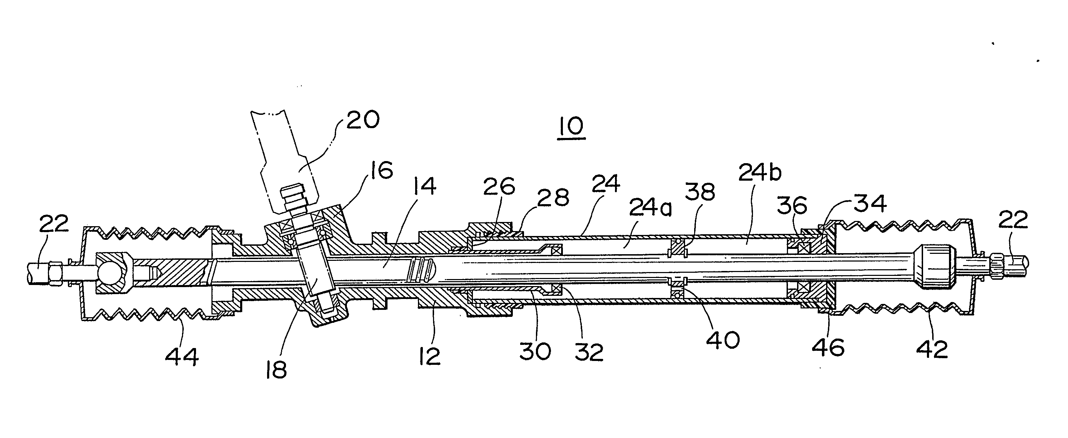

Referring to the single drawing, there is shown a rack and pinion type steering gear 10 having a damper mechanism, according to the present invention.

The steering gear 10 comprises an elongate gear housing 12 in which a major portion of a rack 14 is axially movably received. The housing 12 has an enlarged section 16 in which a pinion gear 18 meshing with the rack 14 is diagonally arranged. A steering shaft 20 extending from a steering wheel (not shown) is connected to the pinion gear 18. Both ends of the rack 14 are connected to side rods 22 from which known linkages (not shown) extend to stirred front wheels of the vehicle. Thus, turning the steering wheel causes leftward or rightward movement of the rack 14 in the housing 12, allowing the front wheels to swivel to left or right on steering knuckles.

The right-hand end of the housing 12 is formed with a larger bore (no numeral) in which an end of a larger cylinder 24 is sealingly and tightly received having the rack 14 spacedly and coaxially received therein. Designated by numerals 26 and 28 are sealing members. A smaller cylinder 30 is secured to the bottom of the larger bore of the housing 12, having the rack 14 received therein. The free end of the smaller cylinder 30 is enlarged, and a sealing member 32 is secured to the enlarged end to assure sealing between the interior of the larger cylinder 24 and that of the smaller cylinder 30. The right-hand end of the cylinder 24 is plugged with a cap 34 which has a sealing member 36 bearing the rack 14. Thus, a sealed chamber is defined in the cylinder 24. The chamber is filled with oil.

The rack 14 has thereon a piston 38 secured thereto which is sealingly and slidably received in the larger cylinder 24 to divide the chamber thereof into first and second chamber sections 24a and 24b. The piston 38 is formed with an orifice 40 through which oil is

- 4 -

forced to flow upon movement of the piston 38. The outwardly projected both ends of the rack 14 are covered by bellows boots 42 and 44 for dust seal. Designated by numeral 46 is an elastomeric cap which is removably connected to the larger cylinder 24.

When, in operation, an abnormal shock is applied to the rack 14 from the front wheels during cruising, the rack 14 and thus the piston 38 are forced to move in the cylinder 24. During the movement of the piston 38, the oil in one chamber section 24a or 24b is forced to flow into the other chamber section 24b or 24a through the orifice 40, producing a counterforce against the movement. Thus, the movement of the piston 38 and thus the rack 14 is braked, so that the steering wheel is hardly affected by such shock.

The followings are features and advantages of the present invention.

1. Since some of the parts of the steering gear are used as parts of the damper (for example, the rack 14 as a piston rod for the piston 38, and the rack covering sleeve 24 as a cylinder for the piston 38), the entire construction is made compact with reduced parts.

2. Since the construction is made slender, it is suitable to be mounted in a limited narrow space.

- 5 -

3.    Since the construction is made generally symmetrically with respect to the longitudinal axis thereof, any external stress applied to it is balanced.

4.    Since the means (piston 38) for producing the braking action is directly connected to the rack 14, the shock absorbing function is assured.

WHAT IS CLAIMED IS:

1.    A rack and pinion type steering gear having a damper, which comprises:

an elongate housing (2);

an elongate rack (14) partially and axially movably received in said housing to have a coaxial extension thereof projected from the housing axially outwardly;

a pinion gear (18) held by said housing and meshed with said rack to cause axial movement of said rack relative to said housing when rotated about its axis;

a hollow cylinder (24) coaxially extending from said housing to spacedly accommodate therein said coaxial extension of the rack;

means for isolating the interior of said cylinder from the exterior of the same, the interior being filled with oil; and

a piston (38) secured to the coaxial extension of the rack and slidably and sealingly received in said cylinder to divide the interior of the cylinder into two chambers, said piston having an orifice to provide a limited communication between the two chambers.

2.    A rack and pinion type steering gear as claimed in Claim 1, in which said hollow cylinder is snugly received at its one end in a bore formed in said housing.

3.  A rack and pinion type steering gear as claimed in Claim 2, in which said means comprises a hollow cylindrical member (30) secured to the bottom of said bore so as to have said rack received therein; a sealing member (32) secured to a free end of said cylindrical member and sealingly bearing said rack; and a cap (34) plugging one open end of said hollow cylinder.

0053666

Fig. 1

## DOCUMENTS CONSIDERED TO BE RELEVANT

| Category | Citation of document with indication, where appropriate, of relevant passages | Relevant to claim |
|---|---|---|
| X/Y | <u>DE - C - 762 412</u> (AUTO-UNION) | |
| | * the whole document * | 1,2,3 |
| | -- | |
| X | <u>FR - A - 2 025 528</u> (CAM GEARS) | |
| | * claims; figure 2 * | 1,2 |
| | -- | |
| X | <u>FR - A - 2 199 308</u> (ALFA ROMEO) | |
| | * claims; figure 1 * | 1,2 |
| | -- | |
| X | <u>DE - A - 1 905 306</u> (STABILUS) | |
| | * claims; figure 1 * | 1 |
| | -- | |
| Y | <u>FR - A - 2 450 734</u> (NISSAN) | |
| | * page 1, lines 13-32; figure 2 * | 3 |
| | -- | |
| A | <u>FR - A - 1 413 616</u> (ENGINEERING - PRODUCTIONS) | |
| | ------- | |

**CLASSIFICATION OF THE APPLICATION (Int. Cl. 3)**

B 62 D 3/12

**TECHNICAL FIELDS SEARCHED (Int.Cl. 3)**

B 62 D

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 30-03-1982 | PIRIOU |

EPO Form 1503.1  06.78